# EUROPÄISCHE PATENTANMELDUNG

(11) **EP 1 750 077 A2**
(43) Veröffentlichungstag der Anmeldung: **07.02.2007**
(21) Anmeldenummer: 06016307.8
(22) Anmeldetag: 04.08.2006
(51) Int. Cl.: F28D 20/00

(54) **Wärmespeicher für den Wärmebedarf in Häusern**

(30) Priorität: 05.08.2005 DE 102005037587
(71) Anmelder: Meister, Karl, 84375 Kirchdorf (DE)
(72) Erfinder: Meister, Karl, 84375 Kirchdorf (DE)
(74) Vertreter: Möhring, Friedrich

(57) **Zusammenfassung**

Bei einem Wärmespeicher für den Wärmebedarf in Häusern mit einem Speicherkern (6) mit hoher Wärmekapazität im Untergrund, in welchen Rohrleitungen für den Wärmeaustausch eingebettet sind, die einerseits mit einem Heizmittelkreislauf (4) zum Erwärmen des Speicherkerns, andererseits mit einem Verbraucherkreislauf (7) des Hauses koppelbar sind, ist der der Speicherkern (6) allseits von einer Isolierschicht (9) umschlossen, die an ihrer dem Speicherkern (6) zugewandten Innenseite durch eine Kunststofffolie (12) ausgekleidet ist. Dabei ist der Speicherkern (6) gebildet durch eine aushärtende Suspension in Wasser, derart, daß die Rohrleitungen für den Wärmeaustausch dicht umschlossen sind; er ist auf seiner Oberseite durch eine wäßrige Filterschicht aus einer durch eine in Wasser eingebrachte Sand- oder Kiesschüttung (10) abgedeckt.

## Beschreibung

Die Erfindung betrifft einen Wärmespeicher für den Wärmebedarf in Häusern mit Speicherkern mit hoher Wärmekapazität im Untergrund, in welchen Rohrleitungen für den Wärmeaustausch eingebettet sind, die einerseits mit einem Heizmittelkreislauf zum Erwärmen des Speicherkerns, andererseits mit einem Verbraucherkreislauf des Hauses koppelbar sind, wobei der Speicherkern allseits von einer Isolierschicht umschlossen ist, die an ihrer dem Speicherkern zugewandten Innenseite durch eine Kunststofffolie ausgekleidet ist.

Wärmepumpen, welche an das Heizungssystem in Häusern angeschlossen sind, können günstig betrieben werden, wenn der Wärmetausch durch Wärmeentzug aus dem Untergrund nutzbar ist. Hierzu sind in der Regel tiefe Erdbohrungen erforderlich, durch welche es gelingt, über sogenannte Erdkollektoren, Erdwärmesonden oder Wärmebrunnen die Wärmekapazität tieferer Bodenschichten zu nutzen.

Bei einem aus FR 2566883 bekannten Wärmespeicher der eingangs genannten Art besteht der Speicherkern aus einem Wasser-/Sandgemisch, dessen Funktion durch Wasserverlust gefährdet ist. Wegen einer nur mäßigen Wärmekapazität des Speicherkerns ist dessen Volumen verhältnismäßig groß zu bemessen.

In DE 3101537 A1 ist ein Wärmespeicher aus Materialien mit hoher spezifischer Wärme beschrieben. Er besteht im wesentlichen aus einem Bindemittel wie Zement, Ton und Wasser, so daß die Mischung aushärtet, d.h. die eingefüllte Flüssigkeit erstarrt zu einer Masse mit hoher Wärmekapazität. Diese nimmt im Laufe der Zeit jedoch ab, da der Wassergehalt der Speichermasse zunehmend verdunstet.

Demgegenüber liegt der vorliegenden Erfindung die Aufgabe zugrunde, einen Wärmespeicher der eingangs genannten Art mit hoher Wärmekapazität einfach zu gestalten und dessen kostengünstige Herstellung zu ermöglichen; dabei soll ein Heizmittelkreislauf nutzbar sein, der ohne Erdbohrungen auskommt.

Diese Aufgabe wird gemäß dem Kennzeichen von Anspruch 1 gelöst.

Dadurch, daß der Speicherkern auf seiner Oberseite durch eine wässerige Filterschicht aus einer Sand- oder Kiesschüttung abgedeckt ist, ist eine ständige Zufuhr von Wasser in den Speicherkern gewährleistet, so daß aus dem Speicherkern eventuell verdunstendes Wasser auf diese Weise bei Aufrechterhaltung eines günstigen Wärmeübergangs stets ergänzt wird. Die Filterschicht ermöglicht überdies eine einfache Entlüftung des Speicherkerns mittels Leitungen, welche ohne das Erfordernis besonderer Dichtmittel durch die Filterschicht hindurch über die Erdoberfläche ragen.

Gemäß dem erfindungsgemäßen Lösungsvorschlag wird ein von der Erdwärme unabhängiger Wärmespeicher für Häuser geschaffen, der durch einfache bautechnische Mittel kostengünstig hergestellt werden kann. Von besonderer Bedeutung ist dabei die Zusammensetzung des Speicherkerns aus umweltfreundlichen Stoffen, bevorzugt aus einer aushärtenden Suspension in Wasser, derart, daß die Rohrleitungen der Wärmetauscherkreisläufe dicht umschlossen sind. Der Speicherkern besteht dabei bevorzugt aus einer Masse aus
- Tonerdesilikat zu 2 bis 7 Gew.-%,
- Zement zu 2 bis 7 Gew.-%,
- Kaliumsilikat bis zu 4 Gew.-%
- und im übrigen aus Wasser.

Eine besonders vorteilhafte, nach etwa ein bis zwei Tagen ausgehärtete Zusammensetzung des Speicherkerns umfaßt
- 4,5 Gew.-% Bentonit, ein bekannter Spülmittelzusatz für Tiefbohrungen,
- 4,5 Gew.-% Zement,
- 1 Gew.-%, Kaliumsilikat (Kaliwasserglas)
- und 90 % Wasser.

Ein derartiger Speicherkern ist bis zu 90°C aufheizbar. Demgegenüber arbeitet ein aus DE 2828086-A bekannter Speicherkern, der u.a. Glaubersalz enthält, nur bis zu einer oberen Temperatur von 35°C, d.h. er kann nur als unterstützende Wärmequelle eingesetzt werden.

Der erfindungsgemäße Speicherkern umschließt die innerhalb des Speicherkerns verlegten Rohrleitungen der Wärmetauscherkreisläufe besonders dicht, so daß ein günstiger Wärmeübergang gewährleistet werden kann. Die Stoffe, aus denen der Speicherkern besteht, stehen in unbegrenzten Mengen kostengünstig zur Verfügung. Bentonit zeichnet sich durch eine besonders hohe Bindungskapazität für Wasser aus. Kaliumsilikat begünstigt außerordentlich die Aushärtung des Zements. Da die Wasserbindungskapazität des Zements nur etwa den zehnten Teil von Bentonit beträgt, reduziert der Bentonit-Anteil den Einsatz von wesentlich teurerem Zement. Auch die Isolierschicht, bei der es sich um keine tragende Schicht handelt, ist kostengünstig z.B. aus Styropor, Polyurethanschaum, Mineralwolle, Hartfasern oder dgl. herstellbar. Nach außen hin ist sie durch Erdreich abgestützt, nach innen hin gegen den Speicherkern, der auf seiner Oberseite durch die Filterschicht abgedeckt ist.

Eine besonders vorteilhafte Ausführungsform besteht darin, daß die Wärmezufuhr in den Heizmittelkreislauf durch Solarkollektoren, die beispielsweise auf dem Hausdach angeordnet sind, erfolgt.

Anstelle einer Umwälzpumpe kann im Haus eine Wärmepumpe vorgesehen sein, welche in den Verbraucherkreislauf des Hauses eingesetzt ist. Auf der Hausseite bedient die Wärmepumpe dann die Vorlaufkreisläufe sowohl für die Warmwassererzeugung als auch für die Wohnraumheizung.

Bevorzugt ist der erfindungsgemäße Wärmetauscher im Erdreich unmittelbar unterhalb einer Bodenplatte eines Hauses angeordnet, derart daß die Isolierschicht nach außen hin mit einer Seite an die Unterseite der Bodenplatte, mit allen übrigen Seiten an das Erdreich angrenzt. Zur Verbesserung der Lebensdauer der Isolierschicht ist es zweckmäßig, daß diese an ihrer dem Speicherkern zugewandten Innenseite durch eine Kunststofffolie beispielsweise aus Butadien oder Polyethylen ausgekleidet ist. Die Folie ermöglicht außerdem das erstmalige Auffüllen des Speicherkerns innerhalb der Isolierschicht durch Einbringen einer wäßrigen Suspension, die danach aushärtet. Erst daraufhin erfolgt das Überschichten des Speicherkerns mit der Filterschicht, wonach die Oberseite der Isolierschicht angebracht wird.

Die Rohrleitungen im Speicherkern können entweder direkt in den Heizmittelkreislauf oder den Verbraucherkreislauf integriert sein.

Besonders vorteilhaft ist die Zwischenschaltung eines zentralen Wärmetauschers des Hauses, an welchen der Heizmittelkreislauf und die Verbraucherkreisläufe des Hauses, z.B. für Heizung und Warmwasser angeschlossen sind. Im Sommerbetrieb dient der Heizmittelkreislauf auch zum Erwärmen des Speicherkerns, dessen Wärmeenergie im Winterbetrieb entweder direkt über die Verbraucherkreisläufe oder über den zentralen Wärmetauscher, z.B. in Art eines sog. Schichtenspeichers, abrufbar ist.

Im folgenden wird die Erfindung anhand der Zeichnung erläutert. Es zeigt
- Fig. 1: eine erste Ausführungsform des Wärmespeichers mit zwei Rohrleitungen im Speicherkern und
- Fig. 2: eine zweite Ausführungsform mit nur einer Rohrleitung.

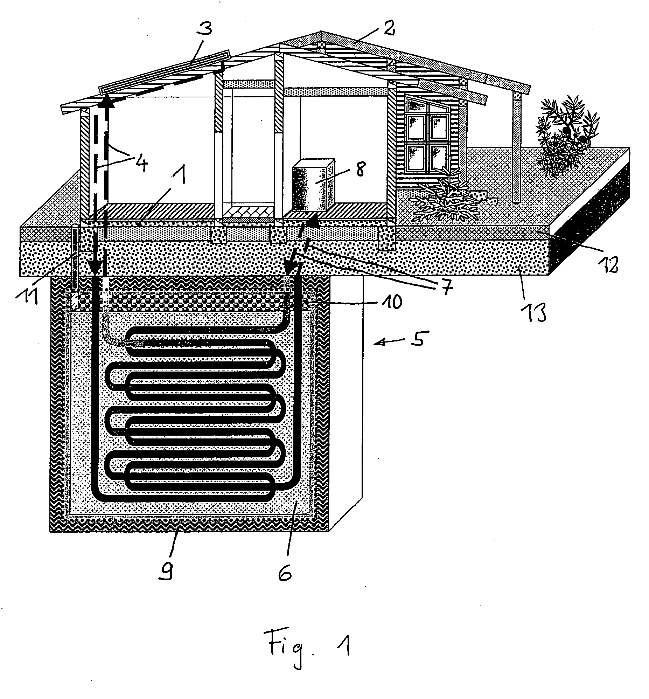

Fig. 1 zeigt auf einer Bodenplatte 1 aus Beton, welche auf einer Humusschicht 12 über Erdreich 13 aufliegt, eine schematische Gebäudekonstruktion eines Wohnhauses, auf dessen Dach 2 Solarkollektoren 3 angeordnet sind. Diese sind über einen Heizmittelkreislauf 4 mit einem Speicherkern 6, der unterhalb der Bodenplatte 1 bevorzugt unter einer Garage angeordnet ist, verbunden. Im Speicherkern 6 ist neben dem Heizmittelkreislauf 4 ein Verbraucherkreislauf 7 angeordnet, welcher im Inneren des Speicherkerns 6 mit dem Heizmittelkreislauf 4 im Wärmeaustausch steht. Der Verbraucherkreislauf 7 ist über eine Umwälzpumpe 8, die auch als Wärmepumpe ausgebildet sein kann, mit den Hausheizungssystemen für die Warmwassererzeugung und für die Wohnraumheizung verbunden. Eine kräftig dimensionierte Isolierschicht 9 umhüllt den Speicherkern 6, welcher an seiner Oberseite durch eine Filterschicht 10 abgedeckt ist. Bei der Filterschicht 10 handelt es sich um eine wäßrige Kiesschüttung, durch die der Speicherkern 6 mittels eines Steigrohrs 11 über die Erdoberfläche entlüftet wird. Über das Steigrohr 11 erfolgt auch das Nachfüllen von Wasser in die Filterschicht 10, welches in dem Umfang erforderlich ist, als Wasser aus dem Speicherkern 6 in die Umgebung verdunstet.

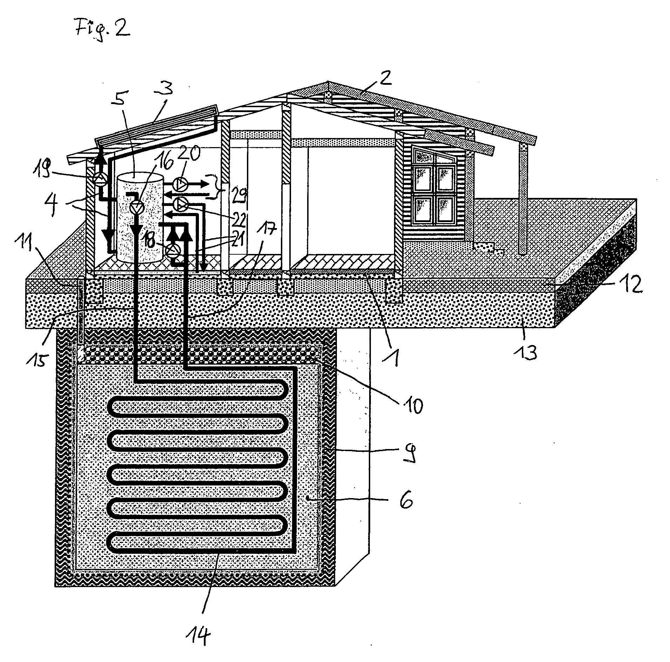

Fig. 2 zeigt eine Gebäudekonstruktion gemäß Fig. 1, jedoch mit einem zentralen Wärmetauscher 5 im Inneren des Gebäudes. Im Speicherkern ist nur eine Rohrleitung 14 vorgesehen, die an den zentralen Wärmetauscher 5 angeschlossen ist. Im Sommerbetrieb arbeitet eine in deren Zulauf 15 angeordnete Zulaufpumpe 16; im Winterbetrieb eine in deren Ablauf 17 angeordnete Ablaufpumpe 18.

Der Heizmittelkreislauf 4 mit Heizmittelpumpe 19 besorgt die Aufheizung des zentralen Wärmetauschers 5, an welchen als Verbraucher der Warmwasserkreislauf 29 mit Förderpumpe 20, der Heizkreislauf 21 mit Vorlaufpumpe 22 sowie die Rohrleitung 14 des Speicherkerns 6 angeschlossen sind.

Mit dem erfindungsgemäßen Wärmetauscher und bei Einsatz von Solarkollektoren, welche etwa über 30% der Dachfläche des Hauses erstreckt sind, besteht die Möglichkeit der Erzeugung von Heizwärme in der Größenordnung von ca. 6,2 kWh, was unter winterlichen Bedingungen Nordeuropas zum vollständigen Beheizen eines kleinen Wohnhauses von ca. 90m² Wohnfläche ausreichend ist. Dabei wird von einer Speicherkapazität des Speicherkerns von ca. 40 kWh pro m³ ausgegangen bei einer Temperatur des Speicherkerns bis maximal ca. 90°C. Es können bis zu 60 sonnenlose Tage überbrückt werden, d.h. erst danach gibt der Speicherkern keine nutzbare Wärmenergie mehr ab.

## Patentansprüche

1. Wärmespeicher für den Wärmebedarf in Häusern mit einem Speicherkern (6) mit hoher Wärmekapazität im Untergrund, in welchen Rohrleitungen für den Wärmeaustausch eingebettet sind, die einerseits mit einem Heizmittelkreislauf (4) zum Erwärmen des Speicherkerns, andererseits mit einem Verbraucherkreislauf (7) des Hauses koppelbar sind, wobei der Speicherkern (6) allseits von einer Isolierschicht (9) umschlossen ist, die an ihrer dem Speicherkern (6) zugewandten Innenseite durch eine Kunststofffolie (12) ausgekleidet ist,
**dadurch gekennzeichnet,**
**daß** der Speicherkern (6) gebildet ist durch eine aushärtende Suspension in Wasser, derart, daß die Rohrleitungen für den Wärmeaustausch dicht umschlossen sind und
**daß** der Speicherkern (6) auf seiner Oberseite durch eine wäßrige Filterschicht aus einer durch eine in Wasser eingebrachte Sand- oder Kiesschüttung (10) abgedeckt ist.

2. Wärmespeicher nach Anspruch 1,
**dadurch gekennzeichnet,**
**daß** der Speicherkern (6) durch eine Masse aus Tonerdesilikat zu 2 bis 7 Gew.-%, Zement zu 2 bis 7 Gew.-%, Kaliumsilikat bis zu 4 Gew.-%, Rest Wasser gebildet ist.

3. Wärmespeicher nach Anspruch 1,
**dadurch gekennzeichnet,**
**daß** der Speicherkern (6) durch die Filterschicht (10) hindurch über die Erdoberfläche entlüftet ist.

4. Wärmespeicher nach Anspruch 1,
**dadurch gekennzeichnet,**
**daß** die Isolierschicht (9) aus Styropor, Polyurethanschaum, Mineralwolle, Hartfasern oder dgl. gebildet ist.

5. Wärmespeicher nach Anspruch 1,
**dadurch gekennzeichnet,**
**daß** der Heizmittelkreislauf (4) seine Wärme über Solarkollektoren (3) bezieht.

6. Wärmespeicher nach Anspruch 1,
**dadurch gekennzeichnet,**
**daß** im Verbraucherkreislauf (7) eine Umwälzpumpe (8) vorgesehen ist, die als Wärmepumpe ausgebildet ist.

7. Wärmespeicher nach Anspruch 1,
**dadurch gekennzeichnet,**
**daß** Rohrleitungen des Speicherkerns (6) an den Heizmittelkreislauf (4) angeschlossen sind.

8. Wärmespeicher nach Anspruch 1,
**dadurch gekennzeichnet,**
**daß** Rohrleitungen des Speicherkerns (6) an den Verbraucherkreislauf (7) angeschlossen sind.

9. Wärmespeicher nach Anspruch 1,
**dadurch gekennzeichnet,**
**daß** Rohrleitungen des Speicherkerns (6) an einen zentralen Wärmetauscher (5) des Hauses angeschlossen sind.

10. Wärmespeicher nach Anspruch 9,
**dadurch gekennzeichnet,**
**daß** der zentrale Wärmetauscher (5) zur Einspeisung von Wärme mit dem Heizmittelkreislauf koppelbar ist.

11. Wärmespeicher nach Anspruch 9,
**dadurch gekennzeichnet,**
**daß** der zentrale Wärmetauscher (5) zur Abgabe von Wärme mit dem Verbraucherkreislauf koppelbar ist.
